# EUROPÄISCHE PATENTANMELDUNG

(11) **EP 4 465 145 A1**
(43) Veröffentlichungstag der Anmeldung: **20.11.2024**
(21) Anmeldenummer: 24155677.8
(22) Anmeldetag: 05.02.2024
(51) Int. Cl.: G05D 21/02, C02F 1/00

(54) **VERSORGUNGSSYSTEM ZUR ERZEUGUNG VON CHLORDIOXID UND DESSEN BEIMISCHUNG ZU WASSER UND VERFAHREN ZUR ÜBERWACHUNG UND STEUERUNG EINES SOLCHEN VERSORGUNGSSYSTEMS**

(30) Priorität: 19.05.2023 DE 102023113160
(71) Anmelder: Krones AG, 93073 Neutraubling (DE)
(72) Erfinder: MEYER, Andreas, 93073 Neutraubling (DE); STUBENHOFER, Markus, 93073 Neutraubling (DE)
(74) Vertreter: Grünecker Patent- und Rechtsanwälte PartG mbB

(57) **Zusammenfassung**

Beschrieben wird ein Versorgungssystem zur Erzeugung von Chlordioxid und dessen Beimischung zu Wasser in einer Abfüllanlage oder dergleichen Anlage zur Lebensmittelproduktion sowie ein Verfahren zur Überwachung und Steuerung des Versorgungssystems. Dieses umfasst Sensoren zur Überwachung wenigstens eines Verbrauchsmittelparameters und wenigstens eines Maschinenparameters betreffend die Zufuhr und/oder Konzentration des Chlordioxids zum/im Wasser, einen Datenausgang zum Versenden mittels derartiger sensorischer Überwachung gewonnener Messdaten aus dem Versorgungssystem und einen Dateneingang zum Empfang externer Steuerdaten zur Steuerung des Versorgungssystems. Mittels der Messdaten und der empfangenen Steuerdaten lässt sich das Versorgungssystem programmiert steuern und ermöglicht eine ferngesteuerte Optimierung von Prozessen zur Herstellung, Verteilung und Anwendung von Chlordioxid in einer Abfüllanlage.

## Beschreibung

Die Erfindung betrifft ein Versorgungssystem zur Erzeugung von Chlordioxid und dessen Beimischung zu Wasser in einer Abfüllanlage oder dergleichen Anlage zur Lebensmittelproduktion und ein Verfahren zur Überwachung und Steuerung eines solchen Versorgungssystems.

Versorgungssysteme zum Erzeugen von Chlordioxid und dessen Beimischung zu Prozesswasser können bekanntermaßen in Anlagen zur Abfüllung flüssiger Produkte, wie beispielsweise Getränke, in Behälter, wie beispielsweise Flaschen, verwendet werden. Chlordioxid hat sich als besonders effektives Biozid zur Desinfektion unterschiedlicher Prozesseinheiten von Abfüllanlagen bei gleichzeitig geringer Korrosivität und Reaktion in unkritische Zerfallsprodukte bewährt. Dies ist vor allem dann der Fall, wenn das Chlordioxid aus einer alkalischen Grundkomponente und einer sauren Grundkomponente auf Schwefelsäure-Basis oder in Kombination alkalischer und neutraler Grundkomponenten erzeugt wird. Allerdings muss das Chlordioxid aufgrund geringer Haltbarkeit vor Ort in der Abfüllanlage hergestellt werden.

Es ist prinzipiell bekannt, Maschinenparameter solcher Versorgungssysteme betreffend die Zufuhr und/oder Konzentration des Chlordioxids zum bzw. im Prozesswasser messtechnisch zu überwachen. Ähnliches gilt für Parameter von Verbrauchsmitteln solcher Versorgungssysteme, bei denen es sich zum einen um die Grundkomponenten zur Herstellung des Chlordioxids und zum anderen um technische Additive handeln kann, wobei beispielsweise deren Füllstände, Verbräuche und/oder bestimmte Eigenschaften, wie beispielsweise pH-Werte oder Konzentrationen, laufend überwacht werden können. Messungen solcher Maschinenparameter und Verbrauchsmittelparameter liefern dann in der Regel Istwerte, die beispielsweise durch Vergleich mit Sollwerten zur Steuerung bzw. Regelung solcher Versorgungssysteme verwendet werden können.

Nachteilig ist jedoch, dass die zugehörige Betriebsoptimierung und -planung vergleichsweise viel Erfahrung mit dem jeweiligen Versorgungssystem bzw. mit der dieses umfassenden Anlage sowie Personal mit entsprechender Qualifikation erfordert.

Es besteht daher demgegenüber Verbesserungsbedarf, beispielsweise um Chlordioxid-Versorgungssysteme nach Installation, Instandhaltung oder Produktumstellung schneller zu optimieren und/oder hinsichtlich einer effizienteren Bereitstellung zugehöriger Verbrauchsmittel.

Die gestellte Aufgabe wird mit einem Versorgungssystem und mit einem Verfahren zur Überwachung und Steuerung des Versorgungssystems gemäß den unabhängigen Ansprüchen sowie mit einer Abfüllanlage umfassend das Versorgungssystem gelöst. Bevorzugte Ausführungsformen sind Gegenstand der Unteransprüche.

Das Versorgungssystem dient demnach der Erzeugung von Chlordioxid und dessen Zudosierung zu Wasser einer Abfüllanlage. Das Versorgungssystem umfasst hierzu: Sensoren zur Überwachung wenigstens eines Verbrauchsmittelparameters in Form eines Zustroms, Verbrauchs, Vorrats und/oder einer Eigenschaft wenigstens einer Grundkomponente zur lokalen Herstellung des Chlordioxids und zur Überwachung wenigstens eines Maschinenparameters betreffend die Zufuhr und/oder Konzentration des Chlordioxids zum bzw. im Wasser; wenigstens einen Datenausgang zum Versenden mittels derartiger sensorischer Überwachung gewonnener Messdaten aus dem Versorgungssystem; wenigstens einen Dateneingang zum Empfang externer Steuerdaten zur Steuerung des Versorgungssystems; und eine speicherprogrammierbare Steuereinrichtung zur Steuerung des Versorgungssystems auf der Grundlage der empfangenen Steuerdaten und mittels der sensorischen Überwachung gewonnener Messdaten.

Die gewonnenen Messdaten können somit außerhalb des Versorgungssystems gesammelt und verarbeitet werden, beispielsweise in einem maschinenübergreifenden Überwachungssystem. Auch kann man dort die externen Steuerdaten erzeugen und an das Versorgungssystem übermitteln.

Somit ist eine zentrale Verarbeitung der Messdaten und Erzeugung der Steuerdaten extern möglich, beispielsweise um die mit den Sensoren gewonnenen Messdaten miteinander und/oder mit historischen Messdaten zu verrechnen. Dadurch lässt sich beispielsweise prognostizieren, wie sich bestimmte Konstellationen von Maschinen- und Verbrauchsmittelparametern auf zukünftige Produktionsprozesse auswirken können. Auch lassen sich historische Messdaten oder anderweitige Erfahrungswerte von Versorgungssystemen vergleichbarer Bauart in die zentrale bzw. externe Datenverarbeitung einbeziehen.

Auf dieser Grundlage können die Steuerdaten automatisch erzeugt und an das Versorgungssystem gesandt werden, um beispielsweise einen bestimmten Maschinenzustand und/oder einen Betriebsmodus des Versorgungssystems auf geeignete Weise anzupassen. Beispielsweise kann wenigstens ein Aktor, beispielsweise eine Pumpe oder ein Ventil, des Versorgungssystems dadurch direkt angesteuert oder ein zugehöriger Sollwert angepasst werden. Dies kann den wenigstens einen überwachten Verbrauchsmittel- und/oder Maschinenparameter betreffen.

Unter einer "Überwachung" ist hier definitionsgemäß eine kontinuierliche oder in ausreichend kurzen zeitlichen Abständen wiederholte Messung zu verstehen, so dass sich daraus ein zeitlicher Verlauf des überwachten Parameters innerhalb eines laufenden Produktions- oder Instandhaltungsprozesses bestimmen oder zur Planung eines solchen Prozesses prognostizieren lässt.

Bei dem "Wasser" kann es sich um Prozesswasser der Abfüllanlage, Abwasser der Abfüllanlage oder aus solchem Prozesswasser und/oder Abwasser gewonnenes Trinkwasser handeln. Prozess- und/oder Abwässer sind hier generell als Lösungen auf Wasserbasis zu verstehen und sind nicht auf bestimmte Inhaltstoffe beschränkt.

Verbrauchsmittel im Sinne der vorliegenden Erfindung sind insbesondere solche, für die ein chargenweiser Nachschub aus Transportbehältern oder dergleichen erforderlich ist, beispielsweise die genannten Grundkomponenten zur Herstellung des Chlordioxids, technische Additive wie beispielsweise Korrosionsschutzmittel, aber auch Reinigungsmittel, Säuren und Laugen zur pH-Regulierung und Schmierstoffe für Antriebe. Im Gegensatz dazu können Verbräuche aus (öffentlichen) Versorgungsnetzen gesehen werden. Strom-, Gas- und Frischwasserverbräuche können im Sinne der vorliegenden Erfindung daher als Maschinenparameter des Versorgungssystems angesehen und entsprechend überwacht werden.

Die beschriebene zentrale Auswertung der erhobenen Messdaten zur Erzeugung der Steuerdaten erfolgt vorzugsweise in einem maschinenübergreifenden Überwachungssystem zur digitalen ortsunabhängigen Überwachung von Maschinenzuständen (Condition-Monitoring-Tool, auch Watchdog genannt), das beispielsweise in einer Daten-Cloud bzw. auf zugehörigen Servern in prinzipiell bekannter Weise ortsunabhängig bereitgestellt werden kann. Unter "maschinenübergreifend" kann hier insbesondere auch "anlagenübergreifend" verstanden werden, also beispielsweise wenigstens zwei Produktionsstandorte umfassen.

Mit einem derart maschinenübergreifenden Überwachungssystem ist zudem eine Anzeige von Messdaten, Maschinenzuständen und/oder Handlungsempfehlungen auf mobilen Endgeräten möglich, beispielsweise auf einem Smartphone oder einer Smartwatch. Auch können auf diese Weise Prognosedaten ermittelt und ausgegeben werden, beispielsweise eine mit bestimmten Vorräten von Verbrauchsmitteln mögliche Restlaufzeit des Versorgungssystems. Auch können Anweisungen für den Nachschub bestimmter Verbrauchsmittel mobil ausgegeben werden. Solche Angaben können beispielsweise in Ergänzung zu den Steuerdaten auch direkt an das Versorgungssystem gesandt und dort angezeigt werden.

In einer das Versorgungssystem umfassenden Abfüllanlage können zudem weitere Messdaten und/oder Maschinenzustandsdaten ermittelt und an das maschinenübergreifende Überwachungssystem übermittelt werden, insbesondere von Prozesseinheiten, die mit dem Wasser versorgt werden, das mit dem erzeugten Chlordioxid versetzt wurde. Bei den Prozesseinheiten kann es sich beispielsweise um einen Tunnelpasteur, einen Kühlturm, eine Flaschenwaschmaschine und/oder eine Aufbereitungseinheit zur Entsorgung und insbesondere Aufbereitung des mit dem Chlordioxid versetzten Wassers handeln.

Somit kann zum einen der Betrieb des Versorgungssystems zeitnah an die auf diese Weise festgestellten Messdaten und/oder Maschinenzustandsdaten angepasst werden. Zum anderen können derartige Messdaten und/oder Maschinenzustandsdaten vom maschinenübergreifenden Überwachungssystem auch für spätere Datenauswertungen gespeichert und beispielsweise für statistische Auswertungen oder dergleichen verwendet werden. Der Produktionsbetrieb des Versorgungssystems lässt sich somit sowohl im Hinblick auf den aktuellen Produktionsbetrieb in der Abfüllanlage als auch hinsichtlich unterschiedlicher Erfahrungswerte mit dem Versorgungssystem, bauartgleichen Versorgungssystemen und/oder weiteren Produktionsprozessen mit dem Versorgungssystem effektiv optimieren.

Das Versorgungssystem umfasst wenigstens eine Erzeugungseinheit zum Erzeugen von Chlordioxid wenigstens aus einer alkalischen Grundkomponente, die insbesondere auf Natriumchlorit basiert oder daraus besteht, und einer sauren oder neutralen Grundkomponente, und optional zudem eine Verteileinheit zum Verteilen des daraus hergestellten Chlordioxids an wenigstens zwei voneinander getrennte Kreisläufe mit Wasser. Somit lassen sich mehrere Prozesseinheiten der Abfüllanlage effizient mit entsprechend desinfiziertem Wasser versorgen. Die saure Grundkomponente basiert auf oder besteht aus beispielsweise Schwefelsäure oder Salzsäure. Schwefelsäure ermöglicht einerseits geringere Chlorid-Konzentrationen als Salzsäure, welche andererseits den Vorteil einer Trinkwasser-Zulassung hat. Die neutrale Komponente basiert auf oder besteht aus beispielsweise Peroxodisulfat.

Bei dem Verfahren zur Überwachung und Steuerung eines Versorgungssystems der beschriebenen Art überwacht man darin sensorisch Istwerte wenigstens eines Verbrauchsmittelparameters betreffend eine Grundkomponente zur Herstellung des Chlordioxids und wenigstens eines Maschinenparameters betreffend die Zufuhr und/oder Konzentration des Chlordioxids zum bzw. im Wasser. Ferner versendet man auf dieser Grundlage gewonnene Messdaten in einen Bereich außerhalb des Versorgungssystems und insbesondere außerhalb der Abfüllanlage und empfängt im Gegenzug entsprechend außerhalb bereitgestellte Steuerdaten zur Steuerung des Versorgungssystems. Schließlich wird dieses auf der Grundlage der empfangenen Steuerdaten und mittels der sensorischen Überwachung gewonnener Messdaten auf elektronisch programmierte Weise gesteuert.

Das Versorgungssystem und insbesondere das aus diesem und dem maschinenübergreifenden Überwachungssystem resultierende Gesamtsystem ermöglicht somit eine vollautomatisierte Chlordioxiderzeugung und -bereitstellung für Prozesseinheiten in lebensmittelherstellenden Produktionsanlagen, beispielsweise in einer Abfüllanlage, einer Brauerei, einem Sudhaus oder dergleichen. Entsprechendes gilt für das beschriebene Verfahren, das gegebenenfalls zur vollautomatisierten und/oder digitalisierten Überwachung und Steuerung eines solchen Versorgungssystems ausgebildet ist.

Die Chlordioxidherstellung beruht vorzugsweise auf dem sogenannten Peroxodisulfat-Verfahren und/oder mit demgegenüber untergeordneter Priorität auf dem sogenannten Schwefelsäure-Verfahren oder dem Salzsäure-Verfahren.

Mit dem beschriebenen Verfahren und Versorgungssystem bzw. Gesamtsystem kann nicht nur die Erzeugung des Chlordioxids für sich genommen überwacht werden, vielmehr kann das Versorgungs- bzw. Gesamtsystem auf Anomalien oder dergleichen Produktionsumstände an den einzelnen Chlordioxid-Verbrauchern, wie beispielsweise in einer Waschmaschine, einem Pasteur, bei der Trinkwasserbehandlung, Abwasserbehandlung und/oder Desinfektion, regelungstechnisch reagieren und selbständig Anpassungen an der Chlordioxid-Erzeugung vornehmen. Dies erfolgt vorzugsweise Cloud- und/oder KI-basiert.

Beispiele für die oben genannten Anomalien / Produktionsumstände sind:
- Erhöhter Produkteintrag (Zucker, Proteine) in das Wasser (Prozesswasser) durch Aufplatzen von Behältern in einem Pasteur;
- Voraberhöhung der Chlordioxid-Konzentration im Wasser (Prozesswasser), um Keimbildung zu vermeiden; die Anforderungen an die Qualität des Chlordioxids sind hierfür relativ niedrig, sodass dessen Herstellung auf hohe Ausbeute hin optimiert werden kann (beispielsweise durch Anpassung des Mischungsverhältnisses der Ausgangsstoffe);
- Umstellung des abgefüllten Produkts, beispielsweise von Wasser auf karbonisierte Soft Drinks;
- Erhöhter Bedarf an Chlordioxid zur Desinfektion, aufgrund einer erhöhten Zuckergehalts und/oder Eiweißgehalts, der die Gefahr unerwünschten mikrobiologischen Wachstums; das Versorgungssystem erhöht dann die Chlordioxid-Konzentration und bevorratet automatisch mehr Chlordioxid, um solche Änderungen abfangen zu können (Optimierung der Bevorratung, da Chlordioxid instabil ist und nicht beliebig lange gelagert werden kann);
- Besonders stark verunreinigte Flaschen bei Mehrweggebinden in Flaschenwaschmaschinen; es besteht dann ein erhöhter Bedarf an Chlordioxid zur Desinfektion in letzten Reinigungsschritt, da zuvor bei der Reinigung stark verunreinigter Flaschen die Keimanzahl weniger stark reduziert wurde als bei normal verunreinigten Gebinden; das Versorgungs- bzw. Gesamtsystem erhöht dann automatisch die Chlordioxid-Konzentration und bevorratet automatisch mehr Chlordioxid, wenn solche Flaschen schon vor der Reinigung in der Flaschenwaschmaschine erkannt werden.
- Chlordioxid kann zur Abwasseraufbereitung bis hin zur Trinkwasserqualität eingesetzt werden; um die Grenzwerte gemäß Trinkwasserverordnung einzuhalten, wie beispielsweise Chlorat-Konzentrationen, kann die dafür erforderlich Chlordioxid-Qualität durch dessen Herstellung und somit vom Versorgungs- bzw. Gesamtsystem gesteuert werden. Dies ist Produktionslinien übergreifend möglich, beispielsweise indem Schmutzwasser zu Trinkwasser aufbereitet / desinfiziert und als Ausgangsstoff wieder zum Bierbrauen verwendet wird.

Für eine intelligente und gegebenenfalls Produktionslinien übergreifende maschinelle Steuerung können zum einen Produktionspläne herangezogen werden, beispielsweise indem in der Steuerung implementierte künstliche Intelligenz (KI: beispielsweise mittels prinzipiell bekannter Algorithmen im maschinenübergreifenden Überwachungssystem implementiert) anhand der abgefüllten Produkte automatisch Handlungsbedarf beispielsweise aufgrund zu erwartender Anomalien erkennt. Zum anderen kann bei einer auftretenden Anomalie auch an anderer Stelle eingeplantes Chlordioxid gegebenenfalls kurzfristig umgeleitet werden, um einen Stillstand oder negativen Einfluss auf den Gesamtausstoß der Produktion aufgrund der Anomalie zu vermeiden. Eine solche Anomalie wäre beispielsweise eine erhöhte mikrobiologische Belastung bzw. organische Verschmutzung auf den Flaschen infolge beim Abfüllen überschäumenden Biers. Während ein Stillstand von Füllmaschinen im Hinblick auf den Gesamtausstoß vorrangig zu vermeiden ist, sind beispielsweise bestimmte Reinigungsprogramme, wie zur Desinfektion von Transporteuren oder zum Waschen von Flaschenkästen, weniger zeitkritisch und können gegebenenfalls verschoben werden. Dafür eingeplante und bereits produzierte Chordioxid-Mengen können dann insbesondere mittels KI automatisch umgeleitet und schnell zur Desinfektion der Füllmaschine verwendet werden; parallel kann (außerplanmäßig) mehr Chlordioxid erzeugt werden, um die aufgeschobenen Reinigungs- und/oder Desinfektionsprogramme nachzuholen.

Das beschriebene Gesamtsystem (mit dem in die Steuerung eingebundenen maschinenübergreifenden Überwachungssystem) überwacht prinzipiell Funktionen und Bedarfe mehrerer an der Produktion beteiligter Prozesseinheiten und regelt die Herstellung und Bereitstellung des Chlordioxids für einzelne Prozesseinheiten im laufenden Produktionsbetrieb beispielsweise in Reaktion auf bestehende oder drohende Anomalien und/oder auf der Grundlage bekannter Produktionsdaten. Dadurch kann Chlordioxid in den jeweils benötigten Mengen mit der erforderlichen Qualität automatisch zur Verfügung gestellt werden.

Prinzipiell ist es auch denkbar, die Produktion einzelner Chargen entsprechend jeweiliger Priorisierung der Qualität vs. der Ausbeute zu optimieren, beispielsweise unter Berücksichtigung sowohl produktionsspezifischer als wirtschaftlicher/monetärer Parameter. Ebenso wäre eine Kombination verschiedener Herstellungsverfahren für Chlordioxid (s. o.) möglich, da sich diese hinsichtlich Kosten und Qualität der Chlordioxid-Erzeugung erheblich unterscheiden. Je nach Art und Größe der versorgten Produktionslinie / Produktionsanlage wären Erzeuger nach dem Peroxodisulfat-, Schwefelsäure- und/oder Salzsäure-Verfahren denkbar.

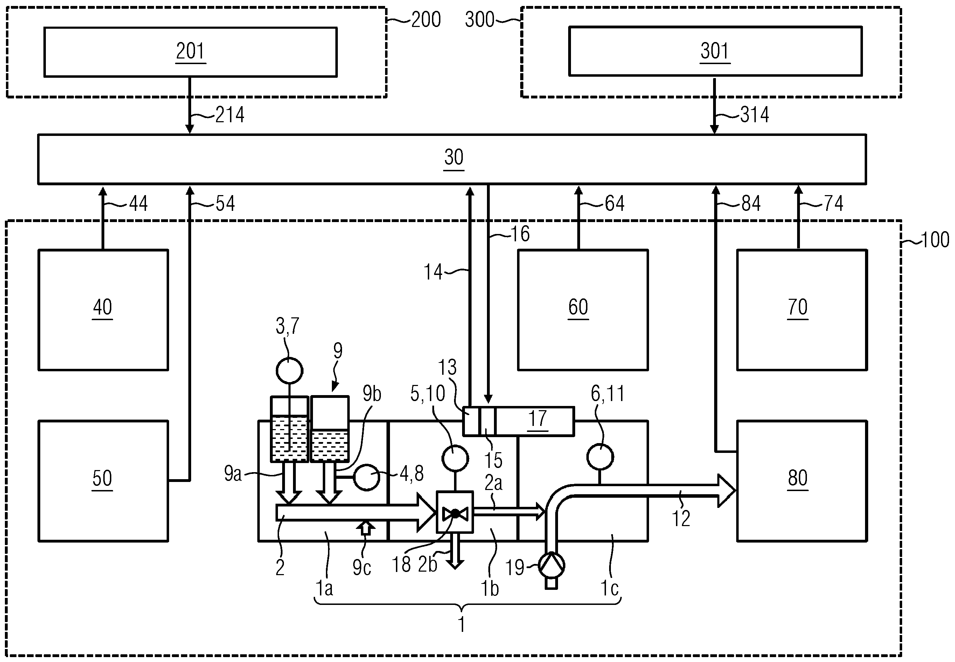

Eine bevorzugte Ausführungsform der Erfindung ist zeichnerisch dargestellt. Die einzige Figur zeigt schematisch ein Versorgungssystem zur Erzeugung von Chlordioxid und dessen Beimischung (Zudosierung) zu Wasser, beispielsweise Prozesswasser, als Bestandteil einer Abfüllanlage und mit einem maschinenübergreifenden Überwachungssystem.

Wie die Figur erkennen lässt, wird das Versorgungssystem 1 vorzugsweise in einer Abfüllanlage 100 betrieben und kann funktional in eine Erzeugungseinheit 1a zum Erzeugen von Chlordioxid 2, eine optionale Verteileinheit 1b zum Verteilen des Chlordioxids 2 und wenigstens eine Zuführeinheit 1c zum Zuführen des Chlordioxids 2 zu Wasser 12 untergliedert werden.

In der optionalen Verteileinheit 1b wird das erzeugte Chlordioxid 2 auf Teilströme 2a, 2b verteilt, die voneinander getrennt dem Wasser 12 zugeführt werden können, was vorzugsweise der Versorgung unterschiedlicher Prozesseinheiten der Abfüllanlage 100 mit Chlordioxid-haltigem Wasser 12 dient. Bei dem Wasser 12 handelt es sich dann definitionsgemäß um Prozesswasser (dargestellt) der Abfüllanlage 100. Alternativ könnte das Wasser 12 aber auch Abwasser (nicht dargestellt) der Abfüllanlage 100 sein oder aus Prozesswasser und/oder Abwasser aufbereitetes Trinkwasser (nicht dargestellt).

Die Dosierung des Chlordioxids 2, also dessen Zustrom zum Wasser 12, kann je nach Leitungsführung in jeder der oben genannten funktionalen Einheiten eingestellt werden. Diese können örtlich in einer Geräteeinheit zusammengefasst und/oder örtlich auf mehrere Geräteeinheiten verteilt werden.

Das Versorgungssystem 1 umfasst Sensoren 3, 4, 5, 6 zur laufenden Überwachung wenigstens eines Verbrauchsmittelparameters 7, 8 wenigstens eines Verbrauchsmittels 9 des Versorgungssystems 1 und zur Überwachung wenigstens eines Maschinenparameters 10, 11 des Versorgungssystems 1 betreffend die Zufuhr und/oder Konzentration des Chlordioxids 2 zum bzw. im Wasser 12.

Bei dem wenigstens einen Verbrauchsmittel 9 handelt es sich im Beispiel um eine alkalische Grundkomponente 9a zur Herstellung des Chlordioxids 2 und um eine saure oder neutrale Grundkomponente 9b zur Herstellung des Chlordioxids 2. Die alkalische Grundkomponente 9a ist beispielsweise Natriumchlorit (NaClO₂), die Grundkomponente 9b ist in ihrer sauren Variante vorzugsweise eine auf Schwefelsäure basierende Lösung. Als Basis hierfür wäre prinzipiell aber auch eine andere Säure denkbar, beispielsweise Zitronensäure oder Salzsäure. Die Grundkomponente 9b ist in ihrer neutralen Variante vorzugsweise Peroxodisulfat. Unter Grundkomponenten sind hier unverzichtbare Komponenten zur Herstellung des Chlordioxids 2 zu verstehen, im Gegensatz zu optionalen Komponenten, wie beispielsweise einem Additiv 9c, das eine bestimmte technische Wirkung des Chlordioxids 2 unterstützen und/oder dessen Haltbarkeit verbessern kann.

Im gezeigten Beispiel misst ein erster Sensor 3 einen ersten Verbrauchsmittelparameter 7, bei dem es sich hier um einen Füllstand der alkalischen Grundkomponente 9a handelt. Ferner misst ein zweiter Sensor 4 einen zweiten Verbrauchsmittelparameter 8, der hier beispielhaft einen Zustrom der sauren bzw. neutralen Grundkomponente 9b des Chlordioxids 2 betrifft. Es versteht sich hierbei, dass die alkalische und die saure / neutrale Grundkomponente 9a, 9b vorzugsweise auf die gleiche Weise überwacht werden, was der Übersichtlichkeit halber in der Figur nicht dargestellt ist.

Vorzugsweise wird (unabhängig von der dargestellten Ausführungsform) eine Vielzahl von Verbrauchsmittelparametern 7, 8 des Versorgungssystems 1 überwacht, beispielsweise ein Zustrom, Verbrauch, Vorrat und/oder eine bestimmte Eigenschaft, wie beispielsweise ein pH-Wert oder dergleichen, des jeweiligen Verbrauchsmittels 9.

Überwachte Verbrauchsmittel 9 sind (unabhängig von der dargestellten Ausführungsform) insbesondere solche, die für den Produktionsbetrieb und die regelmäßige Instandhaltung des Versorgungssystems 1 eingesetzt werden und bedarfsabhängig nachzufüllen sind, beispielsweise für einen hygienischen und zuverlässigen Betrieb des Versorgungssystems 1, zu dessen Reinigung, und/oder als Hilfsstoffe für dessen Aggregate bzw. Aktoren, wie beispielsweise Pumpen, Ventile oder dergleichen.

Als Beispiele für Maschinenparameter im Sinne der vorliegenden Erfindung wird hier ein erster Maschinenparameter 10 in Form einer Ventilstellung der Verteileinheit 1b mit einem dritten Sensor 5 und ein zweiter Maschinenparameter 11 in Form einer Konzentration des Chlordioxids 2 im Wasser 12 mit einem vierten Sensor 6 gemessen. Andere denkbare Maschinenparameter wären beispielsweise der Leitwert, der pH-Wert oder eine mikrobiologische Kenngröße des Wassers 12 oder dergleichen.

Verbrauchsmittel 9 können im Produktionsbetrieb des Versorgungssystems 1 mittels prinzipiell bekannter Dosiereinrichtungen (nicht dargestellt) automatisch zudosiert werden, beispielsweise dem Chlordioxid 2 und/oder dem Wasser 12. Ebenso ist zur Instandhaltung des Versorgungssystems 1 eine entsprechende Zudosierung zu einer Reinigungsflüssigkeit und/oder zu Spülwasser (nicht dargestellt) möglich.

Das Versorgungssystem 1 umfasst wenigstens einen Datenausgang 13 zum Versenden von Messdaten 14, die mit wenigstens einem der Sensoren 3 - 6 gewonnen werden. Bei den Messdaten 14 kann es sich sowohl um Rohdaten als auch um auf geeignete Weise im Bereich des Versorgungssystems 1 verarbeitete Messdaten handeln.

Unter dem Versenden der Messdaten 14 ist deren Export in einen Bereich außerhalb des Versorgungssystems 1 und insbesondere in einen Bereich außerhalb der das Versorgungssystem 1 umfassenden Abfüllanlage 100 zu verstehen.

Das Versorgungssystem 1 umfasst wenigstens einen Dateneingang 15 zum Empfang externer Steuerdaten 16, also solcher, die außerhalb des Versorgungssystems 1 und insbesondere außerhalb der dieses umfassenden Abfüllanlage 100 zur Steuerung des Versorgungssystems 1 erzeugt und von dort importiert werden.

Während des Produktionsbetriebs werden die Messdaten 14 vorzugsweise laufend exportiert, ebenso ist dann vorzugsweise laufend der Empfang der externen Steuerdaten 16 möglich.

Das Versorgungssystem 1 umfasst wenigstens eine speicherprogrammierbare Steuereinrichtung 17 zur Steuerung des Versorgungssystems 1 mittels der über den wenigstens einen Dateneingang 15 empfangenen Steuerdaten 16 und mittels zumindest eines Anteils der Messdaten 14, die mittels der Sensoren 3 - 6 gewonnen werden. Diese Messdaten 14 können von der Steuereinrichtung 17 intern verarbeitet und/oder bereits geeignet aufbereitet vom jeweiligen Sensor bzw. Messgerät an diese übergeben werden.

Die Steuerdaten 16 können beispielsweise Sollwerte einzelner Verbrauchsmittelparameter 7, 8 und/oder einzelner Maschinenparameter 10, 11 sein, die zur Steuerung des Versorgungssystems 1 auf prinzipiell bekannte Weise mit von den Sensoren 3 - 6 ermittelten Istwerten verglichen werden können. Die Steuerdaten 16 können aber auch Steuersignale zur direkten Ansteuerung von Aktoren des Versorgungssystems 1 sein. Beispielsweise können die Steuerdaten 16 verwendet werden, ein Ventil 18 zur Durchflusssteuerung/Verteilung des Chlordioxids 2 im Versorgungssystem 1 und/oder wenigstens eine Pumpe 19 zum Fördern des Wassers 12 zu steuern.

Die beschriebenen Steuerungsfunktionen (bzw. Regelungsfunktionen) sind als Beispiele der genannten Steuerung des Versorgungssystems 1 zu verstehen und basieren auf entsprechender Programmierung der Steuereinrichtung 17, die prinzipiell eine bekannte Architektur aufweisen sowie Eingabe- und Ausgabefunktionen für Bediener umfassen kann.

Der Export der Messdaten 14 und der Import der Steuerdaten 16 erfolgt hier zwischen dem Versorgungssystem 1 und einem maschinenübergreifenden Überwachungssystem 30, das auch als Condition-Monitoring-Tool oder sogenannter Watchdog bezeichnet werden kann.

Das maschinenübergreifende Überwachungssystem 30 arbeitet vorzugsweise auf der Grundlage einer Daten-Cloud und kann somit beispielsweise auf externen Servern bereitgestellt werden.

Der Export und/oder Import der Messdaten 14 bzw. der Steuerdaten 16 ist beispielsweise drahtlos vom/zum Versorgungssystem 1 möglich. Auch wäre es denkbar, einzelne funktionale Einheiten des Versorgungssystems 1, wie beispielsweise die Erzeugungseinheit 1a, die Verteileinheit 1b und die Zuführeinheit 1c mit eigenen Datenausgängen 13 und Dateneingängen 15 der beschriebenen Art auszustatten (nicht dargestellt).

Im maschinenübergreifenden Überwachungssystem 30 können die vom Versorgungssystem 1 versandten Messdaten 14 gespeichert und ausgewertet werden. Diese können zum einen dem Versorgungssystem 1 insgesamt und zum anderen aber auch einzelnen Produktionsprozessen des Versorgungssystems 1 (Produktionschargen) zugeordnet werden. Dies ermöglicht statistische Auswertungen der Messdaten 14 auch über mehrere Produktionsprozesse hinweg im Sinne einer historischen Prozess-/Anlagenoptimierung.

Das maschinenübergreifende Überwachungssystem 30 kann zudem Messdaten anderer Prozesseinheiten der Abfüllanlage 100 verarbeiten und mit Messdaten 14 des Versorgungssystems 1 vergleichen und/oder verrechnen.

Beispielsweise kann die Abfüllanlage 100 umfassen: eine Flaschenwaschmaschine 40 für Leerflaschen, eine Füllmaschine 50 zum Abfüllen von Abfüllprodukten; eine Aufbereitungseinheit 60 zur Prozess- bzw. Abwasseraufbereitung des Wassers 12 insbesondere zu Trinkwasser; einen Tunnelpasteur 70 zum Pasteurisieren der Abfüllprodukte; und einen beispielsweise der Flaschenwaschmaschine 40 und dem Tunnelpasteur 70 zugeordneten Kühlturm 80. Mit Chlordioxid 2 versetztes Wasser 12 kann dann beispielsweise in der Flaschenwaschmaschine 40, dem Tunnelpasteur 70 und dem Kühlturm 80 verwendet werden, was beispielhaft nur für den Kühlturm 80 symbolisiert angedeutet ist.

Solche Prozesseinheiten können jeweils optional zugehörige Messdaten 44, 54, 64, 74, 84 durch entsprechenden Datenexport an das maschinenübergreifende Überwachungssystem 30 senden, wobei es sich um Verbrauchsmittel- und/oder Maschinenparameter der jeweiligen Prozesseinheit handeln kann.

Somit ist eine maschinenübergreifende Auswertung von Messdaten 14, 44, 54, 64, 74, 84 im Überwachungssystem 30 möglich und somit eine entsprechend umfassende Erstellung und Übermittlung externer Steuerdaten 16 an das Versorgungssystem 1.

Das maschinenübergreifende Überwachungssystem 30 kann zudem anlagenübergreifend arbeiten, beispielsweise unter Einbeziehung von Messdaten 214, 314, die von wenigstens einem entsprechenden Versorgungssystem 201, 301 zur Herstellung / Beimischung von Chlordioxid wenigstens einer weiteren Abfüllanlage 200, 300 übermittelt werden. Ebenso könnten Messdaten anderer Prozesseinheiten (nicht dargestellt) deren jeweiligen Abfüllanlage 200, 300 zum maschinenübergreifenden Überwachungssystem 30 übertragen werden.

Durch eine anlagenübergreifende Auswertung von Messdaten 14, 214, 314 von Versorgungssystemen 1, 201, 301 zur Herstellung / Beimischung von Chlordioxid, die beispielsweise hinsichtlich bestimmter Spezifikationen baugleich sein können, lässt sich eine Vielzahl von Messdaten der beschriebenen Art miteinander verrechnen und als Grundlage für die Ausgabe externer Steuerdaten 16 für das Versorgungssystem 1 verwenden. Somit können zahlreiche Erfahrungswerte sowohl zur maschinenübergreifenden Prozess- und Anlagenoptimierung innerhalb der Abfüllanlage 100 als auch anlagenübergreifend verwendet werden, also unter Berücksichtigung mehrerer Abfüllanlagen 100, 200, 300.

Mit Hilfe des beschriebenen Exports von Messdaten 14 und Imports externer Steuerdaten 16 können Maschinenfunktionen, die Verbrauchsmittelversorgung und/oder die Instandhaltung des Versorgungssystems 1 beispielsweise vom maschinenübergreifenden Überwachungssystem 30 automatisch ferngesteuert werden, also auf digitalem Wege bzw. durch ein Online-Management.

Die Sensoren 3 - 6 können sowohl Verbrauchsmittelparameter 7, 8, wie beispielsweise Konzentrationen und/oder Füllstände von Verbrauchsmitteln, wie beispielsweise der Grundkomponenten 9a, 9b, von Additiven 9c für das Chlordioxid 2 bzw. das Wasser 12 oder dergleichen, überwachen, ebenso Maschinenparameter 10, 11, bei denen es sich beispielsweise um eine Wassertemperatur, eine Wasserqualität, einen Wasserverbrauch, einen Energieverbrauch, einen Pumpendruck, eine Filterdurchlässigkeit oder dergleichen handeln kann.

Ebenso können Umgebungsbedingungen bzw. Umgebungsparameter, beispielsweise die Au-βenlufttemperatur und/oder Außenluftfeuchte im Bereich des Versorgungssystems 1, und/oder mikrobiologische Parameter beispielsweise des Wassers 12 gemessen werden und als Messdaten 14 in die externe Datenauswertung und Erzeugung von Steuerdaten 16 einfließen.

Die Erfassung der Messdaten 14 und die Übertragung der Steuerdaten 16 ist samt zugehöriger Steuerung des Versorgungssystems 1 daher vollautomatisch möglich. Beispielsweise können Steuersignale für einzelne Aktoren des Versorgungssystems 1 direkt an diese übertragen werden und/oder Betriebsarten bzw. Steuerprogramme des Versorgungssystems 1 mittels der Steuerdaten 16 automatisch ausgewählt werden.

In die Verarbeitung der Messdaten 14 und gegebenenfalls 214, 314 und die Erzeugung der Steuerdaten 16 können auch beispielsweise bei der Produktkontrolle pasteurisierter Abfüllprodukte gewonnene Messdaten (nicht dargestellt) einfließen oder dergleichen. Bei hygienisch unzureichenden Kontrollergebnissen kann das Versorgungssystem 1 mittels der externen Steuerdaten 16 automatisch auf die jeweiligen Qualitätsabweichungen reagieren, beispielsweise die Konzentration des Chlordioxids 2 im Wasser 12 erhöhen.

Das maschinenübergreifende Überwachungssystem 30 kann selbstlernende Algorithmen verwenden, um anhand eines zunehmenden Erfahrungsschatzes aus Messdaten 14 und gegebenenfalls 214, 314 sukzessive die Behandlungsqualität und/oder Effizienz der Produktion bzw. Instandhaltung zu optimieren.

Auf der Grundlage der empfangenen Messdaten 14 und gegebenenfalls 214, 314 kann das maschinenübergreifende Überwachungssystem 30 automatisch auf bestimmte Maschinenzustände bzw. Fehlerzustände des Versorgungssystems 1 oder auf Auswertungen der dort erzeugten Messdaten 14 reagieren und beispielsweise eine Ferndiagnose durchführen und/oder eine Fehlerbehebung ferngesteuert initiieren.

Zudem können Messdaten 14 vom Versorgungssystem 1 auf prinzipiell bekannte Weise direkt verarbeitet werden, beispielsweise in der Steuereinrichtung 17, um interne Steuerdaten (nicht dargestellt) zu erzeugen.

Mit dem Versorgungssystem 1 und dem beschriebenen Verfahren zu dessen Überwachung und Steuerung können Prozessbedingungen der Herstellung, Verteilung Zudosierung von Chlordioxid 2 durch eine zusätzliche Auswertung historischer Messdaten 14 (früherer Produktionsprozesse/Produktionschargen) sukzessive verbessert werden. Zudem können Verbrauchsmittel 9 effizienter eingesetzt und deren Nachschub zuverlässig und bedarfsgerecht automatisch organisiert werden, beispielsweise für die Grundkomponente 9a, 9b.

Die erhobenen Messdaten 14 können prinzipiell standortübergreifend für eine umfassende externe Datenanalyse und Optimierung von Prozessen zur Herstellung, Verteilung, Zudosierung und Anwendung von Chlordioxid 2 in Abfüllanlagen 100 eingesetzt werden.

Im beschriebenen Versorgungssystem 1 bzw. mit dem beschriebenen Verfahren können Maschinenparameter 10, 11 beispielsweise betreffend die Funktion von Ventilen und Pumpen, die Belagbildung in Verrohrungen/Leitungen, der Chlordioxid-Gehalt in Wasser 12, die Funktionalität von Dosier- und Messeinrichtungen und dergleichen zentral überwacht oder gegebenenfalls automatisch optimiert werden. Dadurch können mögliche Fehlerquellen und Personalbedarf für diese Zwecke erheblich reduziert werden.

Der Einsatz von Verbrauchsmitteln 9 lässt sich entsprechend optimieren, insbesondere der alkalischen und der sauren bzw. neutralen Grundkomponenten 9a, 9b des Chlordioxids 2, gegebenenfalls aber auch anderer oxidierender Biozide wie beispielsweise Chlorbleichlauge oder nicht oxidierender Biozide bzw. Organobiozide wie beispielsweise Isothiazolinone, die ebenso zur Desinfektion unterschiedlicher Prozesseinheiten von Abfüllanlagen 100 bzw. des dort eingesetzten Wassers 12 verwendet werden können. Ebenso können Reinigungsmittel, technische Additive 9c, wie beispielsweise Mittel zum Korrosionsschutz, zur Unterdrückung von Steinbildung oder zur Härtestabilisierung/weiterer Säuren und Laugen zur pH-Regulierung oder dergleichen effizienter eingesetzt werden. Auch lässt sich der Verbrauch von Schmierstoffen für Aktoren minimieren, die gegebenenfalls im Bereich des Versorgungssystems 1 verwendet werden.

Mit den beschriebenen Sensoren 3 - 6 kann beispielsweise der Füllstand, Verbrauch und/oder eine Eigenschaft, wie die Konzentration bestimmter Verbrauchsmittel 9, beispielsweise der Grundkomponenten 9a, 9b und/oder von Additiven 9c, überwacht werden. Ebenso kann beispielsweise eine Wasserqualität, wie beispielsweise pH-Wert, visuelle Sauberkeit, Trübung, mikrobiologische Belastung oder dergleichen von Wasser 12 oder auch anderer Prozessmedien laufend überwacht werden. Ebenso sind Prüfungen der Materialverträglichkeit möglich, beispielsweise der Korrosivität bestimmter verwendeter Verbrauchsmittel 9 in/an Leitungen, Aktoren und/oder Stellorganen des Versorgungssystems 1.

Auf der Grundlage der Messdaten 14 und gegebenenfalls 214, 314 können Instandhaltungsprozesse auch anderer Prozesseinheiten automatisch angefordert oder eingeleitet werden, beispielsweise ein Auskochen des Tunnelpasteurs 70.

Art, Anzahl und Anordnung der dargestellten Sensoren 3 - 6 und der mittels der Steuerdaten 16 gesteuerten Aktoren, wie beispielsweise des Ventils 18 und der Pumpe 19, sind lediglich beispielhaft und stellvertretend für andere prinzipiell bekannte Sensoren, Aktoren und Aggregate von Versorgungssystemen 1 der beschriebenen Art. Dies gilt auch für die genannten Verbrauchsmittelparameter 7, 8 und Maschinenparameter 10, 11.

## Patentansprüche

1. Versorgungsystem (1) zur Erzeugung von Chlordioxid (2) und dessen Beimischung zu Wasser (12), insbesondere Prozesswasser, Abwasser und/oder daraus gewonnenem Trinkwasser, in einer Anlage zur Lebensmittelproduktion, insbesondere Abfüllanlage (100), umfassend:
- Sensoren (3 - 6) zur Überwachung wenigstens eines Verbrauchsmittelparameters (7, 8) in Form eines Zustroms, Verbrauchs, Vorrats und/oder einer Eigenschaft wenigstens einer Grundkomponente (9a, 9b) zur lokalen Herstellung des Chlordioxids und zur Überwachung wenigstens eines Maschinenparameters (10, 11) betreffend die Zufuhr und/oder Konzentration des Chlordioxids zum/im Wasser (12);
- wenigstens einen Datenausgang (13) zum Versenden mittels derartiger sensorischer Überwachung gewonnener Messdaten (14) aus dem Versorgungssystem;
- wenigstens einen Dateneingang (15) zum Empfang externer Steuerdaten (16) zur Steuerung des Versorgungssystems; und
- eine speicherprogrammierbare Steuereinrichtung (17) zur Steuerung des Versorgungssystems auf der Grundlage der empfangenen Steuerdaten (16) und mittels der sensorischen Überwachung gewonnener Messdaten (14).

2. Versorgungssystem nach Anspruch 1, mit einer Erzeugungseinheit (1a) zum Erzeugen von Chlordioxid wenigstens aus einer alkalischen Grundkomponente (9a), die insbesondere auf Natriumchlorit basiert, und einer sauren oder im Wesentlichen neutralen Grundkomponente (9b), die insbesondere auf Schwefelsäure, Salzsäure oder Peroxodisulfat basiert, und mit einer Verteileinheit (1b) zum Verteilen des daraus hergestellten Chlordioxids auf Teilströme (2a, 2b) zur voneinander getrennten Beimischung des Chlordioxids zu Wasser (12) insbesondere in unterschiedlichen Prozesseinheiten der Abfüllanlage (100).

3. Versorgungssystem nach Anspruch 1 oder 2, wobei die Sensoren (3 - 6) dazu ausgebildet sind, Ist-Werte von wenigstens zwei der folgenden Verbrauchsmittelparameter (7, 8) bzw. Maschinenparameter (10 ,11) zu messen: Füllstand, Verbrauch/Dosierleistung oder Konzentration einer alkalischen Grundkomponente (9a) zur Chlordioxid-Herstellung, insbesondere einer Natriumchlorit-Lösung; Füllstand, Verbrauch/Dosierleistung oder Konzentration einer sauren oder im Wesentlichen neutralen Grundkomponente (9b) zur Chlordioxid-Herstellung, insbesondere einer auf Schwefelsäure basierenden Lösung; Füllstand, Verbrauch/Dosierleistung oder Konzentration eines Additivs (9c) in Form eines Mittels zur Steinverhütung, zur Härtestabilisierung und/oder zum Korrosionsschutz; Leitwert, Trübung oder mikrobielle Belastung des Wassers (12); Ventilstellung an einer, Durchfluss durch eine, oder Belagdicke in einer Leitung für das Chlordioxid (2) oder das Wasser (12); Leistung einer Pumpe (19) zum Fördern des Chlordioxids oder des Wassers.

4. Versorgungssystem nach Anspruch 1, 2 oder 3, wobei die Steuereinrichtung (17) dazu programmiert ist, einen Maschinenzustand und/oder Betriebsmodus des Versorgungssystems (1), insbesondere den überwachten Verbrauchsmittelparameter (7, 8) und/oder Maschinenparameter (10, 11), auf der Grundlage der empfangenen Steuerdaten (16) automatisch anzupassen.

5. Versorgungssystem nach einem der vorigen Ansprüche, wobei der Dateneingang (15) zum insbesondere drahtlosen Empfang der Steuerdaten (16) von einem maschinenübergreifenden Überwachungssystem (30) und der Datenausgang (13) zum insbesondere drahtlosen Versand der Messdaten (14) an dieses ausgebildet sind.

6. Versorgungssystem nach Anspruch 5, wobei das maschinenübergreifende Überwachungssystem (30) und/oder das Versorgungssystem dazu ausgebildet ist, die Steuerdaten (16) auf der Grundlage von Messdaten (44, 54, 64, 74, 84) und/oder Maschinenzustandsdaten wenigstens einer mit dem Chlordioxid (2) versorgten Prozesseinheit zu erzeugen, bei der es sich insbesondere um eine Flaschenwaschmaschine (40), eine Füllmaschine (50), eine Aufbereitungseinheit (60) zur Aufbereitung des Wassers (12) insbesondere zu Trinkwasser, einen Tunnelpasteur (70) und/oder einen Kühlturm (80) handelt.

7. Versorgungssystem nach Anspruch 5 oder 6, wobei das maschinenübergreifende Überwachungssystem (30) und/oder das Versorgungssystem dazu ausgebildet ist, die Versorgung wenigstens einer Prozesseinheit mit dem erzeugten Chlordioxid quantitativ und/oder zeitlich zu steuern, wobei die Prozesseinheit eine Flaschenwaschmaschine (40), eine Füllmaschine (50), eine Aufbereitungseinheit (60) zur Aufbereitung des Wassers (12) insbesondere zu Trinkwasser, ein Tunnelpasteur (70) und/oder ein Kühlturm (80) ist.

8. Anlage zur Lebensmittelproduktion, insbesondere Abfüllanlage (100), umfassend das Versorgungssystem (1) nach Anspruch 5 und wenigstens eine der folgenden und jeweils zum Versand von Messdaten (44, 54, 64, 74, 84) und/oder Maschinenzustandsdaten an das maschinenübergreifende Überwachungssystem (30) eingerichteten und mit dem mit Chlordioxid (2) versetzten Wasser (12) versorgten Prozesseinheiten: einen Tunnelpasteur (70); einen Kühlturm (80); eine Flaschenwaschmaschine (40); eine Füllmaschine (50); und eine Aufbereitungseinheit (60) zur Aufbereitung des Wassers (12) insbesondere zu Trinkwasser.

9. Verfahren zur Überwachung und Steuerung eines Versorgungssystems (1) zur Erzeugung von Chlordioxid (2) und dessen Beimischung zu Wasser (12) einer Abfüllanlage (100), wobei man: Istwerte wenigstens eines Verbrauchsmittelparameters (7, 8) betreffend eine Grundkomponente (9a, 9b) zur Herstellung des Chlordioxids und wenigstens eines Maschinenparameters (10, 11) betreffend die Zufuhr und/oder Konzentration des Chlordioxids zum/im Wasser sensorisch überwacht; auf dieser Grundlage gewonnene Messdaten (14) in einen Bereich außerhalb des Versorgungssystems und insbesondere der Abfüllanlage versendet; diesbezüglich außerhalb bereitgestellte Steuerdaten (16) zur Steuerung der Erzeugung und Beimischung des Chlordioxids empfängt; und die Erzeugung und Beimischung auf der Grundlage der empfangenen Steuerdaten und mittels der sensorischen Überwachung gewonnener Messdaten (14) elektronisch programmiert steuert.

10. Verfahren nach Anspruch 9, wobei die Verbrauchsmittelparameter (7, 8) bzw. Maschinenparameter (10, 11) umfassen: Füllstand, Verbrauch/Dosierleistung oder Konzentration einer alkalischen Grundkomponente (9a) zur Chlordioxid-Herstellung, insbesondere einer Natriumchlorit-Lösung; Füllstand, Verbrauch/Dosierleistung oder Konzentration einer sauren oder im Wesentlichen neutralen Grundkomponente (9b) zur Chlordioxid-Herstellung, insbesondere einer auf Schwefelsäure basierenden Lösung; Füllstand, Verbrauch/Dosierleistung oder Konzentration eines Additivs (9c) in Form eines Mittels zur Steinverhütung, zur Härtestabilisierung und/oder zum Korrosionsschutz; Leitwert, Trübung oder mikrobielle Belastung des Wassers (12); Ventilstellung an einer, Durchfluss durch eine, oder Belagdicke in einer Leitung für das Chlordioxid (2) oder das Wasser (12); Leistung einer Pumpe (19) zum Fördern des Chlordioxids oder des Wassers.

11. Verfahren nach einem der Ansprüche 9 oder 10, wobei man einen Maschinenzustand und/oder Betriebsmodus eines Versorgungsystems (1) zur Erzeugung und Beimischung des Chlordioxids (2), insbesondere den überwachten Verbrauchsmittelparameter (7, 8) und/oder Maschinenparameter (10, 11), mittels der empfangenen Steuerdaten (16) automatisch anpasst.

12. Verfahren nach einem der Ansprüche 9 bis 11, wobei die Messdaten (14) an ein, insbesondere cloud-basiertes, maschinenübergreifendes Überwachungssystem (30) versandt und die Steuerdaten (16) von diesem empfangen werden.

13. Verfahren nach Anspruch 12, wobei die Steuerdaten (16) vom maschinenübergreifenden Überwachungssystem (30) auf der Grundlage der übermittelten Messdaten (14) eines unter Einbeziehung des Versorgungssystems (1) laufenden Produktionsprozesses und entsprechender Messdaten wenigstens eines historischen Produktionsprozesses mit demselben und/oder mit einem im Wesentlichen baugleichen Versorgungssystem berechnet werden.

14. Verfahren nach Anspruch 12 oder 13, wobei die Steuerdaten (16) vom maschinenübergreifenden Überwachungssystem (30) auf der Grundlage der übermittelten Messdaten (14) und zusätzlicher Messdaten (44, 64, 74, 84) und/oder Maschinenzustandsdaten berechnet werden, die von wenigstens einer weiteren Prozesseinheit der Abfüllanlage (100) an das maschinenübergreifende Überwachungssystem (30) gesandt werden, wobei die weitere Prozesseinheit mit dem mit Chlordioxid (2) versetzten Wasser (12) versorgt wird und insbesondere ein Tunnelpasteur (70), ein Kühlturm (80), eine Flaschenwaschmaschine (40) oder eine Aufbereitungseinheit (60) zur Entsorgung und insbesondere Aufbereitung des Wassers (12) ist.

15. Verfahren nach einem der Ansprüche 12 bis 14, wobei das maschinenübergreifende Überwachungssystem (30) ferner aus den übermittelten Messdaten (14) Anweisungen für den Nachschub wenigstens eines überwachten Verbrauchsmittels (9) erzeugt / ausgibt und insbesondere an das Versorgungssystem (1) sendet.
